## Europäisches Patentamt

## European Patent Office

## Office européen des brevets

(19)

(11) Veröffentlichungsnummer: **0 050 697**
**B1**

(12) **EUROPÄISCHE PATENTSCHRIFT**

(45) Veröffentlichungstag der Patentschrift:
**10.04.85**

(51) Int. Cl.⁴: **F 24 J 2/00**

(21) Anmeldenummer: **80730068.6**

(22) Anmeldetag: **27.10.80**

(54) **Konzentrierender Reflektor für Sonnenstrahlung mit geringem aerodynamischen Widerstand und hohem aerodynamischen Auftrieb.**

(43) Veröffentlichungstag der Anmeldung:
**05.05.82 Patentblatt 82/18**

(45) Bekanntmachung des Hinweises auf die Patenterteilung:
**10.04.85 Patentblatt 85/15**

(84) Benannte Vertragsstaaten:
**AT CH DE FR GB IT LI NL SE**

(56) Entgegenhaltungen:
**DE - A - 2 643 539**
**DE - A - 2 748 645**
**DE - A - 2 817 928**
**FR - A - 2 452 426**

(73) Patentinhaber: **Arbeitsgruppe Technische Photosynthese, Quastenhornweg 14 a, D-1000 Berlin 22 (DE)**

(72) Erfinder: **Radebold, Reinhart, Dr., Quastenhornweg 14 a, D-1000 Berlin 22 (DE)**

ACTORUM AG

## Beschreibung

Die Erfindung betrifft einen Reflektor gemäss dem 1. Teil des Patentanspruchs 1.

Sonnenstrahlung lässt sich im Prinzip dadurch nutzen, dass sie mit möglichst hohem exergetischen Wirkungsgrad

– entweder momentan umgesetzt wird, und zwar in elektrische Energie über Photozellen, in Antriebsenergie und Klimatisierungsarbeit über thermodynamische Maschinen,
– oder aber kurz- und langfristig gespeichert wird, was thermisch in Form von Wärme mit einer Temperatur höher als die der Umgebung über entropievariable Massen und chemisch durch Photosynthese hochenergetischer Verbindungen in Photoreaktoren möglich ist.

Der Einsatz dieser Möglichkeiten in der Energietechnik wird nun entscheidend davon abhängen, ob erstens die strahlungsabsorbierenden technischen Systeme konzentrierte Strahlung aufnehmen können, ob zweitens geeigente Reflektoren mit hohem Konzentrationsvermögen zur Verfügung gestellt und ob drittens beide den Einflüssen des Klimas weitgehend entzogen werden können.

Die Konzentrierung der Strahlung durch konzentrierende Reflektoren mit einem Konzentrationsvermögen C (wobei 1 < C < 1000 in der Anwendung erreicht werden) bedeutet, dass das strahlungsabsorbierende System im Prinzip nur die Abmessungen des Fokus aufzuweisen braucht. Mit steigendem Konzentrationsvermögen C wird also bei abnehmendem Materialaufwand für das System eine zunehmende Leistungsdichte erzielt. Im Vergleich zu Absorbersystemen für unkonzentrierte Strahlung mit ihrer notwendigerweise grossen Oberflächen ist des weiteren die Abkühlung durch Rückstrahlung und Konvektion stark reduziert, das erreichbare Temperaturniveau der Absorption gesteigert.

Die Konzentrierung der Strahlung durch konzentrierende Reflektoren bedeutet aber auch, dass Reflektor und strahlungsabsorbierendes System zu einer Einheit integriert, am Boden verankert, der Sonne nachgeführt werden müssen. Eine solche Einheit mit ihren grossen, auf die Sonne ausgerichteten, empfindlichen Flächen weist üblicherweise einen hohen aerodynamischen Widerstand auf. Jede stärkere Luftbewegung übt daher erhebliche Kräfte auf die Einheit selbst (in überwiegendem Masse auf den Reflektor), auf die Nachführeinrichtung und auf die Verankerung aus. Staub, grössere Partikel und Regen zerstören die reflektierende Oberfläche. In nördlichen Breiten kommt hinzu, dass die stärkere Bewölkung die Benutzungdauer der Einheit und damit ihre Wirtschaftlichkeit drastisch senkt.

Die Ausbildung geeigneter konzentrierender Reflektoren, in die das strahlungsabsorbierende technische System zur Umsetzung oder Speicherung der Strahlung integriert werden kann, wird daher letztlich (neben der Entwicklung fortgeschrittener Systeme) über die grosstechnische Nutzung der Sonnenenergie entscheiden. Es sind bisher verschiedene Vorschläge gemacht worden, um konzentrierende Reflektoren kostengünstig und mit langer Lebensdauer zu entwickeln; auch die Möglichkeit wurde diskutiert, die Reflektoren bzw. die Einheiten, mit aerostatischem Auftrieb durch eine Gasfüllung geringerer Dichte (verglichen zu Luft) versehen, dem Klima am Boden zu entziehen.

Der vorliegenden Erfindung liegt die Aufgabe zugrunde, einen Reflektor zu schaffen, der bei geringem aerodynamischen Widerstand eine hohe aerodynamische Stabilität und einen hohen aerodynamischen Auftrieb aufweist. Die Erfindung geht dabei von einer im 1. Teil des Anspruches 1 beschriebenen Anordnung aus und sieht einen paraboloiden Reflektor grossen Konzentrationsvermögens für Sonnenstrahlung vor, der einen hohen aerodynamischen Auftrieb, hohe aerodynamische Stabilität und geringen aerodynamischen Widerstand aufweist und, entweder am Boden verankert oder auf dem Wasser schwimmend oder aber vorteilhaft als Flugkörper in grosser Höhe kreuzend, Sonnenstrahlung auf ein mitgeführtes, integriertes Absorbersystem vorwiegend für die chemische Speicherung durch Photosynthese hochenergetischer flüssiger Verbindungen über einen Photoreaktor, aber auch für die Umsetzung in Antriebsenergie über eine thermodynamische Maschine konzentriert. Insbesondere weist dieser Flugkörper die kennzeichnenden Merkmale des Anspruches 1 auf; weitere Merkmale sind in den abhängigen Patentansprüchen dargelegt.

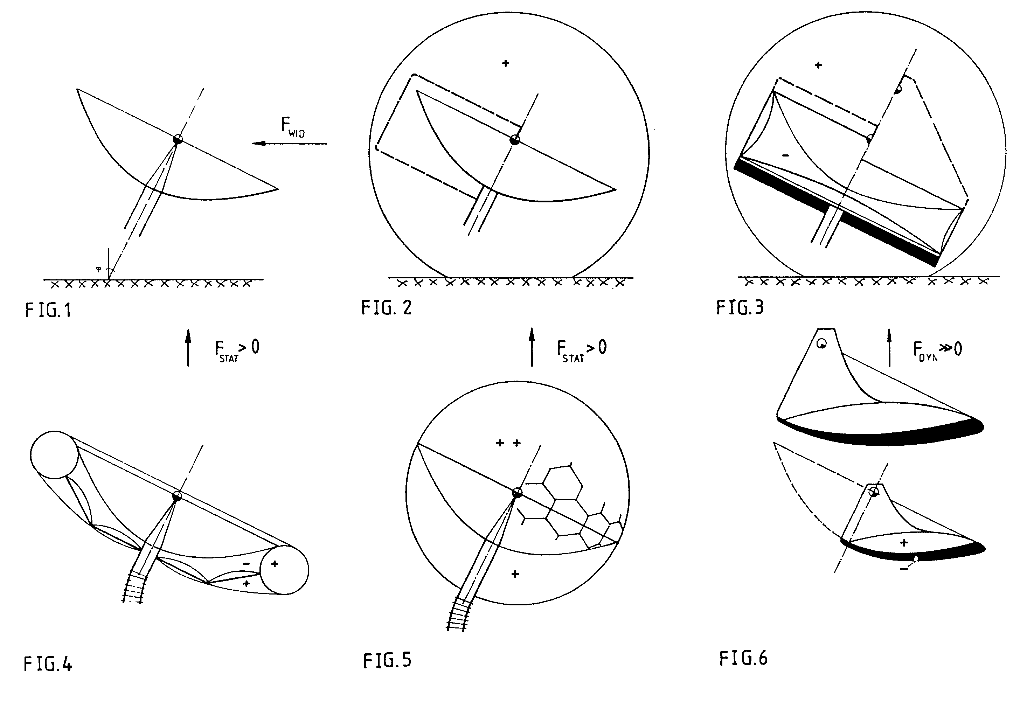

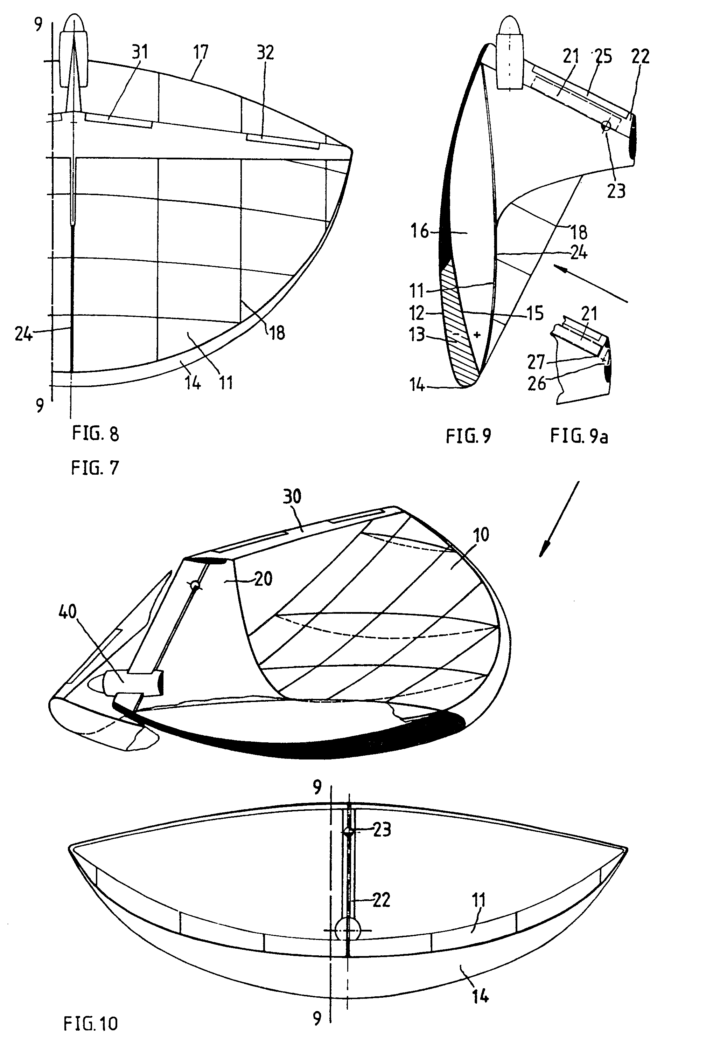

Fig. 1 bis 5 zeigen bekannte Reflektoren und Fig. 6 stellt den in dieser Anmeldung beschriebenen Flugkörper dar. Die Fig. 7 bis 10 zeigen Einzelheiten, Schnitte und Projektionen des Flugkörpers: Fig. 7 ist eine isometrische Darstellung der Erfindung in der bevorzugten Form des konzentrierenden Reflektors als Flugkörper mit einem zusätzlichen Längsschnitt durch den Flugkörper; die Bezugszeichen kennzeichnen die Baugruppen. Fig. 8 ist die Draufsicht auf die eine Hälfte des konzentrierenden Reflektors als Flugkörper, während Fig. 9 einen Längsschnitt entlang der Linie 9–9 in den Fig. 8 und 10 zeigt. Fig. 10 schliesslich ist die Vorderansicht des konzentrierenden Reflektors als Flugkörper, wie er in den Fig. 6 bis 9 dargestellt ist.

Alle Reflektoren in den Varianten nach Fig. 1 bis 6 haben die gleiche Fläche und sind um den gleichen Neigungswinkel $\varphi$ ($\varphi$ = arc tg 0,5 = 25,5°) geneigt. Bei einem Durchmesser von beispielsweise 5,7 m beträgt die Fläche 25,5 m², die Strahlungsleistung im Fokus etwa 25 kW. Für jede dieser Varianten ist der relative aerodynamische Widerstand, bezogen auf die Variante in Fig. 1, berechnet. Die Widerstandkraft $F_{WID}$ berechnet sich aus dem Produkt von Formfaktor (Widerstandszahl) $\sigma$, der Projektionsfläche F in Windrichtung und dem Staudruck p. Da p für alle Varianten gleich ist und nur vom Wind abhängt, wird im folgenden nur das Produkt $\sigma \cdot F$ betrach-

tet. Der relative Formfaktor für eine senkrechte flache Fläche wurde zu $\sigma = 1$, für eine nach innen gewölbte Fläche zu $\sigma = 1,33$, für eine nach aussen gewölbte Fläche zu $\sigma = 0,33$ angenommen. In allen Fällen wurde angenommen, dass der Wind bodenparallel von rechts nach links strömt.

Das Symbol ⊕ kennzeichnet das Stahlungsfenster im Fokus des Reflektors; das strahlungsabsorbierende System ist nicht gezeigt, seine Halterung durch Striche angedeutet. Für geschützte, d.h. beispielsweise in einem Radom befindliche Reflektoren und solche in Leichtbauweise sind Druckdifferenzen zur Stabilisierung erforderlich und in den Fig. 1–6, 9 durch das Symbol + für erhöhten Druck (bezogen auf die Umgebung), durch das Symbol − für verringerten Druck (bezogen auf die Umgebung) gekennzeichnet.

Fig. 1 zeigt den klassischen Parabolspiegel, der, meist aus Blechen geformt, innen mit Spiegelsegmenten ausgelegt ist (Beispiel: System MAN). Der relative Widerstand ist zu $\sigma \cdot F \cdot p = 1$ normiert. Dass ein freistehender Parabolspiegel wie in Fig. 1 wegen seines hohen absoluten aerodynamischen Widerstandes starken Kräften ausgesetzt ist und daher massig gestaltet werden muss, macht besonders Fig. 2 deutlich. Hier ist der parabolische Spiegel in einem transparenten Radom untergebracht, um ihn vor den Windkräften zu schützen mit dem Ziel, den Reflektor, aber auch das Nachführsystem, wesentlich leichter zu gestalten (Beispiel: System Boeing). Obgleich das Radom eine wesentlich grössere Fläche F dem Wind zeigt als der ungeschützte Spiegel nach Fig. 1, ist der relative aerodynamische Widerstand infolge des besseren Formfaktors $\sigma \cdot F \cdot p = 0,67$.

Da bei einer solchen Anordnung wie in Fig. 2 der eigentliche Reflektor nahezu kräftefrei ist, kann auch ein anderes Konstruktionsprinzip, die Leichtbauweise, angewendet werden, wie in Fig. 3 dargestellt. Das Radom bildet auch hier eine transparente, schützende Schicht; der Reflektor wird jetzt aber durch eine formgebende Folie gebildet, die beispielsweise mit Aluminium als reflektierender Schicht bedampft ist. Diese reflektierende Folie wird durch inneren Unterdruck auf die parabolische Form gebracht; dazu ist es notwendig, sie am Rand in eine stützende Schicht in Form eines Zylinders einzuspannen, den Zylinder durch eine schützende Haut gasdicht zu verschliessen und in diesem Raum Unterdruck zu erzeugen. Der Zylinder kann auch in tragendes Gerüst aufgelöst werden (Beispiel: System Klein-Wächter-Bomin, s. z.B. DE-A 2 643 539).

Da die Wirtschaftlichkeit einer Einheit zur Nutzung der Sonnenenergie wie erwähnt nicht allein vom Materialaufwand sondern auch von den Benutzungsstunden abhängt, liegt es im Prinzip nahe, den konzentrierenden Reflektor nebst dem strahlungsabsorbierenden System oberhalb der wesentlichen Wolkenschichten zu verankern. Dies ist nur möglich, wenn die Einheit aerostatischen Auftrieb erzeugt, ein Ziel, das, wie in Fig. 4 gezeigt, durch die Leichtbauweise über gespannte Folien erreicht werden kann. (s. DE-A 2 405 134, insbesondere S. 142 und Fig. 30, 31, und US-A 4 127 453). Da die zur Formgebung erforderlichen Druckdifferenzen gering sind, ist es möglich, erhebliche Auftriebskräfte zu erzeugen, indem die Gasfüllung beispielsweise aus Wasserstoff besteht und zusätzliche Wülste angebracht werden, um das Stützgerüst so weit wie möglich zu reduzieren und um das Gasvolumen zu steigern. Die dem Wind gezeigte Fläche nimmt jedoch zu, der relative Widerstand steigt auf $\sigma \cdot F \cdot p = 1,96$.

Eine Variante für Einheiten mit aerostatischem Auftrieb ist in Fig. 5 gezeigt (s. hierzu R. Radebold, Studie über die Nutzung der Sonnenenergie durch Technische Photosynthese [PLE-Jülich ET 4003 A], S. 5, Bild 2.2, und S. 104 ff., Bild 10.1). Das Prinzip der Leichtbauweise wird beibehalten. Eine spiegelnde Folie dient als Trennwand in einem Radom; die beiden Kammern weisen unterschiedliche Drücke auf, umd die Folie zu krümmen. Der relative Widerstand ist auf $\sigma \cdot F \cdot p = 0,49$ gefallen. Der Vorteil dieser Lösung liegt des weiteren in der Möglichkeit, auf die Füllung mit Wasserstoff zur Auftriebserzeugung zugunsten warmer Luft zu verzichten.

Fig. 6 zeigt den Gegenstand der Erfindung. Der wesentliche Unterschied zu der Einheit in Fig. 5 ist, dass der Auftrieb nicht mehr aerostatisch, sondern aerodynamisch durch geeignete Profilgebung erzielt wird; gleichzeitig wird der aerodynamische Widerstand um mehr als eine Grössenordnung verringert. Das aerodynamische Profil weist einen Formfaktor von $\sigma = 0,04$ auf. Die Füllung mit Wasserstoff oder warmer Luft entfällt. Die Formgebung zu einem nach oben gekrümmten (also seitenstabilen) Tragflügel mit nahezu elliptischen Vorderkanten (also eines seitenstabilen und drehstabilen Tragflügels) geschieht allein durch die Halbierung des Paraboloids (Fig. 6 unten). Um zu einem Tragflügel und damit zu einem Reflektor gleicher Fläche wie in den Fig. 1 bis 5 zu kommen, muss der Durchmesser des Paraboloidsektors vergrössert werden, und zwar etwa um den Faktor $\sqrt{2}$, wie in Fig. 6 oben gezeigt ist. Für das hier gezeigte Beispiel vergrössert sich der Durchmesser des Reflektors von $D = 5,7$ m (Fig. 1 bis 5) auf $D' = 8,6$ m ($D'$ entspricht der Spannweite des Flugkörpers), der Flugkörper hat etwa die halbe Länge. Sein Auftrieb beträgt rund 700 kg, wenn eine spezifische Flächenbelastung von etwa 30 kg/m² wie für Hochleistungssegler bzw. langsame Propellermaschinen zugrunde gelegt wird. Für den relativen Widerstand gilt $\sigma \cdot F \cdot p = 0,017$.

Wie anfangs erwähnt ist die bevorzugte Ausführung des konzentrierenden Reflektors der frei fliegende Flugkörper, wobei wesentlich grössere Spannweiten und damit Strahlungsleistungen in der Grössenordnung von 1 MW aus wirtschaftlichen Gründen vorauszusetzen sind. Diese Anwendung ist aber nicht die einzige, denn ein konzentrierender Reflektor der in den Fig. 6 bis 10 gezeigten Bauweise hat auch in kleinen Abmessungen durchaus wirtschaftliche Bedeutung, wenn er beispielsweise um seine drei Achsen frei drehbar am Boden fixiert wird oder wenn er auf dem Wasser schwimmt. Der sehr geringe aerodynamische Widerstand, die hohe Stabilität und auch der Auftrieb im Falle starker Winde am Boden stellen eine wesentliche Verbesserung gegenüber den Varianten Fig. 1 bis 5 dar. Eine Ausrichtung auf die Sonne ist erforderlich,wobei die Seiten-, Quer- und Höhenruder die Ausrichtung über aerodynamische Kräfte erleichtern können. Da das Triebwerk (ausser etwa zum Ausrichten bei Windstille) nicht gebraucht wird, liegt es bei der Nutzung des nicht-freien Flugkörpers nahe, den Propeller zur zusätzlichen Erzeugung beispielsweise elektrischer Energie über einen Generator anstelle des Triebwerkes zu verwenden.

Die Fig. 7 bis 10 zeigen weitere Einzelheiten des konzentrierenden Reflektors in Form eines Flugkörpers, insbesondere konstruktiver Art. Der Flugkörper besteht, wie aus der isometrischen Darstellung Fig. 7 ersichtlich, aus den Baugruppen

(10) Konzentrierender Reflektor und Tragwerk (Flügel)
(20) Strahlungsabsorber und Seitenruderwerk
(30) Höhen- und Querruderwerk
(40) Triebwerk

Das Tragwerk (Tragflügel) 10 wird aus einer transparenten Folie 11 und der Haut 12 gebildet. Die Haut kann aus Kunststoff und/oder Leichtmetall gefertigt werden. In der bevorzugten Ausführung bedeckt die Haut 12 den profilgebenden Stützkörper 13 aus Hartschaum. Der Stützkörper 13, verbunden mit der Haut 12, stellt die Unterseite eines Tragflügels mit der Flügelnase 14 in Art der Schalenbauweise dar. Die obere Seite des Stützkörpers 13 ist bedeckt mit der reflektierenden Folie 15, die den eigentlichen konzentrierenden Reflektor bildet. Reflektierende Folie 15 und transparente Folie 11 bilden ein Kissen 16, das durch Überdruck einer Gasfüllung, beispielsweise Luft, entsteht, um die konvexe Krümmung der Folie 11 und damit die obere Fläche des Tragflügels 10 zu erzeugen. Der Flügel hat eine Hinterkante 17, welche in der Draufsicht der Fig. 8 als leicht gekrümmte Kurve erscheint. Die Linien 18 deuten ein Netzwerk an, das die transparente Folie 11 unterstützt und einen Teil der Kräfte auf den Stützkörper 13 überträgt, damit die Folie 11 so dünn wie möglich ausgebildet werden kann. Die gestrichelten Linien in Fig. 7 sind die Projektion des Netzwerkes auf die Spiegelfolie 15 in Längsrichtung und dienen zum besseren Verständnis der Figur. Es versteht sich, dass der quasi homogene Stützkörper 13 aus Hartschaum oder ähnlichem Material auch durch ein konventionelles Stützgerüst aus Holmen und Rippen ganz oder teilweise ersetzt oder ergänzt werden kann.

Der konzentrierende Reflektor als Flugkörper besteht des weiteren aus einem Seitenruderwerk 20, das in seinem vorderen Teil relativ dünn ist, um zum einen den Luftwiderstand zu verringern, um zum anderen aber die Fokussierung der Strahlung auf das Absorbersystem 21 zu ermöglichen. Das strahlungsabsorbierende System 21 ist als Modul in den hinteren, verdickten Teil des Seitenruderwerkes, hier durch die Ziffer 22 gekennzeichnet, eingesetzt; sein Strahlungsfenster 23 ist sphärisch, ragt in den dünnen Teil des Seitenruderwerkes und befindet sich im Fokus des konzentrierenden Reflektors. Ist die reflektierende Folie 15 genau justiert, vereinigt sich sämtliche, durch den Pfeil in Fig. 9 dargestellte, einfallende Strahlung im Fenster 23. Das Seitendruckwerk wird durch einen Tragbügel 24 (oberhalb der transparenten Folie 11 befindlich) gehalten, dessen vorderes Ende am Stützkörper 13 montiert ist, dessen hinteres Ende in die Vorderkante des Seitendruckwerkes 20 übergeht. Die Klappe für das Seitenruder ist durch die Ziffer 25 gekennzeichnet.

Das Seitenruderwerk 20 ist mit den beiden Enden des Tragwerkes 10 durch das Höhen- und Querruderwerk 30 verbunden, das eine leicht trapezförmige Gestalt aufweist und die Ruderelemente 31 für das Höhenruder und die Ruderelemente 32 für das Querruder aufweist.

Das Triebwerk 40 in Form einer Turbomaschine oder eines Stirlingmotors mit Propeller ist an der Hinterseite des Flugzeuges befestigt und zwar in der Basis des Seitenruderwerkes 20. Das Triebwerk kann so ausgelegt sein, dass es die Abwärme des strahlungsabsorbierenden Systems 21 verwendet; alternativ kann es aber auch einen unabhängigen Antriebsmechanismus darstellen. Im Falle des nicht-freien Flugkörpers kann an die Stelle des Triebwerkes ein Generator treten.

Es wurde bereits angemerkt, dass der Stützkörper 13 aus Hartschaum auch durch ein konventionelles Stützgerüst aus Holmen und Rippen, wie es aus dem Flugzeugbau her bekannt ist, ersetzt werden kann. Das bedeutet, dass in diesem Fall das Innere des Stützgerüstes 13 der Tragfläche 10 wenigstens teilweise Hohlräume aufweist, und dass diese Hohlräume beispielsweise zur Aufnahme des Treibstoffes für den Antrieb 40 dienen können. Wichtig ist jedoch, dass die Hohlräume vor allem die Edukte für das strahlungsabsorbierende System 21 und die durch Photosynthese gebildeteten Produkte aufnehmen. Es liegt nahe, dass auch im Fall einer Schaumstruktur 13 ein Teil dieser Struktur Hohlräume für die genannten Zwecke aufweisen kann. Zusätzlich, und die gilt speziell für den Fall sehr grosser Flugkörper, kann ein Teil der Hohlräume in der Tragfläche für die Aufnahme eines Piloten verwendet werden.

Zwei weitere Einzelheiten sind zu erwähnen: Die Oberfläche des Seitenleitwerkes 20 in seinem dünneren Teil kann als wärmetauschende Fläche verwendet werden, um die Abwärme des Systems 21 an die Umgebungsluft abzugeben. Eine weitere Änderung ist in der Figur 9a dargestellt, sie betrifft eine Variante für die Strahlungsführung und damit für die Ausbildung des strahlungsaufnehmenden Fensters des Systems 21. In das Höhenleitwerk 30 ist ein Hohlspiegel 26 oberhalb des Brennpunktes eingesetzt, der die Strahlung direkt senkrecht in das System 21 leitet; in diesem Fall entfällt das sphärische Fenster 23 und wird durch ein ebenes Fenster 27 ausserhalb des Fokus ersetzt.

Abschliessend sei darauf hingewiesen, dass bei sehr grossen Flugkörpern der Tragbügel 24 aus statischen Gründen durch eine Rippe abzustützen ist, die sich in der Symmetrieebene des Flugkörpers befindet und dort den Raum zwischen Haut 12 und Folie 11 ausfüllt; in diesem Falle sind die reflektierende Folie 15 und die transparente Folie 11 zweigeteilt.

## Patentansprüche

1. Reflektor für Sonnenstrahlung mit grossem Konzentrationsvermögen, bestehend aus einer verspiegelten (15) und einer transparenten (11) Folie, die, an ihren Rändern gasdicht miteinander verbunden, in ein mit einer dichten Haut (12) mindestens teilweise umhüllten Stützgerüst (13) eingespannt, durch inneren Überdruck ein Kissen (16) formen derart, dass die verspiegelte Folie (15), gegebenenfalls unterstützt durch Unterdruck im Raum des Stützgerüstes (13), in erster Näherung ein Paraboloid bildet, sowie aus einer Halterung für ein im Fokus des Paraboloides anzubringendes Absorbersystem (21) für die konzentrierte Strahlung, dadurch gekennzeichnet, dass die transparente Folie (11) und die Haut (12) sowie das Stützgerüst (13) den Tragflügel (10) eines Flugkörpers bilden, wobei die verspiegelte Folie (15) in Draufsicht einen Sektor des Paraboloides von etwa 180° bildet und die überdeckende transparente Folie (11) die Oberseite eines Tragflügels mit hohem aerodynamischen Auftrieb, mit hoher aerodynamischer Stabilität und mit geringem aerodynamsichen Widerstand bildet, und die durch Sog entstehende aerodynamische Auftriebskraft übernimmt, und dass die das Stützgerüst (13) umhüllende Haut (12) Vorderkante (14) und Unterseite des Tragflügels (10) darstellt und neben den Zugkräften vom Stützgerüst (13) die durch Druck entstehende aerodynamische Auftriebskraft übernimmt, dass die Herstellung für das im Fokus anzubringende Absorbersystem (21) in der Symmetrieebene des Tragflügels (10) angebracht ist und dass diese Halterung das Seitenruderwerk (20) des Flugkörpers bildet, während eine Verbindung von Seitenruderwerk (20) zu den Flügelenden die Funktion des Höhen- und Querruderwerks (30) des Flugkörpers übernimmt.

2. Reflektor nach Anspruch 1, dadurch gekennzeichnet, dass der Flugkörper ein Triebwerk (40) aufweist, das vorzugsweise im Seitenruderwerk (20) untergebracht ist.

3. Reflektor nach Anspruch 1 und 2, dadurch gekennzeichnet, dass die Abwärme des Absorbersystems (21) im Triebwerk (40) ausgenutzt wird.

4. Reflektor nach Anspruch 1 und 3, dadurch gekennzeichnet, dass der Raum des Stützgerüstes (13) Hartschaum enthält bzw. mit Hartschaum ausgefüllt ist.

5. Reflektor nach Anspruch 1 bis 4, dadurch gekennzeichnet, dass der Raum des Stützgerüstes (13) unter Unterdruck steht.

6. Reflektor nach Anspruch 1 bis 5, dadurch gekennzeichnet, dass die transparente Folie (11) durch ein Netz (18) verstärkt ist.

7. Reflektor nach Anspruch 1 und 6, dadurch gekennzeichnet, dass das Seitenruderwerk (20) als Wärmetauscher für das Absorbersystem ausgebildet ist.

8. Reflektor nach Anspruch 1 bis 7, dadurch gekennzeichnet, dass das Höhen- und Querruderwerk (30) an seiner Unterseite einen weiteren Reflektor (26) aufweist, welcher die von der reflektierenden Folie (11) fokussierte Strahlung direkt in das Absorbersystem (21) leitet.

9. Reflektor nach Anspruch 1 bis 8, dadurch gekennzeichnet, dass im Raum des Stützgerüstes (13) vorzugsweise in der Nähe der Flügelnase Vorratsräume untergebracht sind.

10. Reflektor nach Anspruch 2 bis 9, dadurch gekennzeichnet, dass das Triebwerk (40) durch einen Generator ersetzt ist.

## Revendications

1. Réflecteur à haut pouvoir de concentration pour radiation solaire, constitué d'une feuille réfléchissante (15) et d'une feuille transparente (11) reliées ensembles par leurs bords de façon étanche et qui forment, par surpression intérieure, un coussin (16) dans une membrure de soutien entourée au moins partiellement d'une peau étanche (12), de telle sorte que la feuille réfléchissante (15), le cas échéant soutenue par dépression à l'intérieur de la membrure de soutien (13), forme, en première approximation, un paraboloide, ainsi que d'un support destiné à recevoir un système absorbant la radiation concentrée au foyer du paraboloide, caractérisé par le fait que la feuille transparente (11) et la peau (12), ainsi que la membrure de soutien (13) constituent l'aile portante d'un corps volant, la feuille réfléchissante (15) constituant, vu en plan, un secteur de paraboloide d'environ 180° et la feuille transparente (11) la recouvrant constituant la face supérieure d'une aile portante présentant une portance aérodynamique élevée, une stabilité aérodynamique élevée et une faible résistance aérodynamique et supportant la force ascentionnelle aérodynamique produite par succion, et que la peau (12) enveloppant la membrure de soutien (13) constitue le bord d'attaque (14) et la face inférieure de l'aile (10) et supporte, en plus des forces de traction de la membrure de soutien (13), la force ascentionnelle aérodynamique produite par pression, que le support destiné à recevoir un système absorbant au foyer est disposé dans le plan de symétrie de l'aile (10) et que ce support constitue le gouvernail de direction (20) du corps volant, tandis qu'une liaison entre le gouvernail de direction (20) et les extrémités de l'aile est chargée de la fonction de gouvernail de profondeur et de gauchissement (30).

2. Réflecteur selon la revendication 1, caractérisé par le fait que le corps volant comprend un groupe propulseur (40), de préférence logé dans le gouvernail de direction (20).

3. Réflecteur selon les revendications 1 et 2, caractérisé par le fait que la chaleur du système absorbant (21) est utilisée dans le groupe propulseur (40).

4. Réflecteur selon les revendications 1 à 3, caractérisé par le fait que l'espace de la membrure (13) contient de la mousse dure, respectivement est rempli de mousse dure.

5. Réflecteur selon les revendications 1 à 4, caractérisé par le fait que l'espace de la membrure de soutien (13) est dans un état de dépression.

6. Réflecteur selon les revendications 1 à 5, caractérisé par le fait que la feuille transparente (11) est renforcée par un réseau (18).

7. Réflecteur selon les revendications 1 à 6, caractérisé par le fait que le gouvernail de direction (20) est agencé en échangeur de chaleur pour le système absorbant.

8. Réflecteur selon les revendications 1 à 7, caractérisé par le fait que le gouvernail de profondeur et de gauchissement (30) présente, sur sa face inférieure, un autre réflecteur (26) qui conduit directement dans le système absorbant (21) le rayonnement focalisé par la feuille réfléchissante (11).

9. Réflecteur selon les revendications 1 à 8, caractérisé par le fait que des chambres à provision sont aménagées dans l'espace de la membrure de soutien (13), de préférence au voisinage du bord d'attaque de l'aile.

10. Réflecteur selon les revendications 2 à 9, caractérisé par le fait que le groupe propulseur (40) est remplacé par un générateur.

**Claims**

1. Reflector for solar radiation, having high power of concentration and being comprised of a specularly reflecting foil (15) and a transparent foil (11) being gas tightly interconnected along their edges further being tensioned in a support frame (13) the frame being at least partially enveloped in a tight skin (12), said foils forming a cushion through internal excess pressure such that the specularly reflecting foil (15) eventually supported by low pressure in the space of the support frame (13), establishes in first approximation a paraboloid further comprising a holding structure for an absorber system (21) for the concentrated radiation, to be arranged in the focal point of the paraboloid, characterized in that the transparent foil (11) and the skin (12) as well as the support frame (13) constitute the air foil of an airborne vehicle whereby the specularly reflecting foil (15) in top elevation establishes a sector of the paraboloid covering about 180 degrees and the overlayed transparent foil (11) establishes the upper side of an airfoil with high aerodynamic lift, high aerodynamic stability and low aerodynamic drag and taking up the aerodynamic lifting forces generated through suction, and that the skin (12) enveloping the support frame (13) establishes the leading edge (14) and the underside of the airfoil (10) and takes up the aerodynamic lifting force generated through pressure in addition to the tension forces from the support frame (13), that the holding device for the absorber system (21) to be arranged in the focal point, is disposed in the plane of symmetry of the airfoil (10) and that said holding device establishes the rudder (20) of the airborne device, while a connection from the rudder (20) to the ends of the airfoil assumes the function of elevator and transverse rudders (30) of the airborne vehicle.

2. Reflector in accordance with claim 1, characterized in that the airborne vehicle is provided with a propulsion engine (40) which is preferably arranged in the rudder (20)

3. Reflector in accordance with claims 1 and 2, characterized in that the waste heat of the absorber system (21) is utilized in the propulsion engine (40).

4. Reflector in accordance with claims 1–3, characterized in that the space of support frame (13) contains rigid foam or is filled with rigid foam.

5. Reflector in accordance with claims 1–4, characterized in that the space of the support frame (13) is under low pressure.

6. Reflector in accordance with claims 1–5, characterized in that the transparent foil (11) is reinforced through a mesh (18).

7. Reflector in accordance with claims 1–6, characterized in that the rudder (20) is constructed as heat exchanger for the absorber system (21).

8. Reflector in accordance with claims 1–7, characterized in that the elevator and transverse rudder (30) is provided on its underside with an additional reflector (26) which directs the radiation focused by the reflecting foil (11) directly into the absorber system (21).

9. Reflector in accordance with claims 1–8, characterized that storage chamber or spaces are provided in the space of the support frame (13) preferably in the vicinity of the nose of the wing.

10. Reflector in accordance with claims 2–9, characterized in that the propulsion engine (40) is replaced by a generator.

FIG.3

$F_{DYN} \gg 0$

FIG.6

FIG. 2

$F_{STAT} > 0$

FIG.5

$F_{WID}$

$F_{STAT} > 0$

FIG.1

FIG.4

FIG. 8

FIG. 7

FIG. 9

FIG. 9a

FIG. 10